# EUROPÄISCHE PATENTSCHRIFT

(11) **EP 2 219 550 B1**
(45) Veröffentlichungstag und Bekanntmachung des Hinweises auf die Patenterteilung: **23.08.2017**
(21) Anmeldenummer: 08861037.3
(22) Anmeldetag: 23.10.2008
(51) Int. Cl.: A61C 15/00, A61C 19/06

(54) **VORRICHTUNG ZUR INFILTRATION APPROXIMALER SCHMELZLÄSIONEN VON ZÄHNEN**
DEVICE FOR THE INFILTRATION OF ENAMEL LESIONS IN TEETH
DISPOSITIF D'INFILTRATION DE LÉSIONS DE L'ÉMAIL DANS LA ZONE INTERDENTAIRE

(30) Priorität: 18.12.2007 EP 07024508
(43) Veröffentlichungstag der Anmeldung: 25.08.2010
(73) Patentinhaber: Mühlbauer Technology GmbH, 22547 Hamburg (DE); Charité Universitätsmedizin Berlin, 10117 Berlin (DE)
(72) Erfinder: EFFENBERGER, Steffen, 20251 Hamburg (DE); MEYER-LÜCKEL, Hendrik, 24631 Langwedel (DE); PARIS, Sebastian, 24251 Osdorf (DE); EFFENBERGER, Susanne, 20251 Hamburg (DE)
(74) Vertreter: Glawe, Delfs, Moll
(86) Internationale Anmeldenummer: PCT/EP2008/008968
(87) Internationale Veröffentlichungsnummer: WO 2009/077029

(56) Entgegenhaltungen:
- EP-A- 1 769 773
- WO-A-2006/011003
- DE-C- 377 764
- DE-U1- 9 106 538
- GB-A- 191 846
- US-A- 1 624 054
- US-A- 4 483 676
- US-A1- 2005 271 999
- US-A1- 2006 000 486
- US-A1- 2006 127 845

## Beschreibung

Die Erfindung betrifft eine Vorrichtung zur Infiltration approximaler Zahnoberflächen mit einem flexiblen flächigen Element, das einen oberflächenbereich zum Aufnehmen einer der Behandlung dienenden Flüssigkeit aufweist, und einer Halterung, in die das flächige Element aufgespannt ist. US 2006/0000486 A1, worauf die zweiteilige Form des Anspruchs 1 basiert, beschriebt eine vorrichtung, womit mit dem flächigen Element nicht nur Zahnzwischenräume gereinigt werden, sondern auch mit Fluorverbindungen versehen werden können. Zu diesem Zweck wird das tuchförmige oder tuchähnliche flächige Element mit der Fluorverbindung getränkt. Damit werden dann gleichzeitig beide Zahnoberflächen, die sich im Zwischenraum gegenüberstehen, benetzt. Die beidseitige Benetzung ist in vielen Fällen unerwünscht. Dies ist insbesondere der Fall, wenn man ein dentales Restaurationsmaterial für beginnende Karies applizieren will. Karies zeichnet sich durch fortschreitende Demineralisierung des Zahnschmelzes durch Stoffwechselprodukte von Bakterien aus, wodurch zunächst kleinere Läsionen ("white spots") entstehen. Unbehandelt entstehen schließlich zur Zerstörung des Zahns führende Kavitäten. Selbst frühzeitig erkannte Läsionen sind selten zu remineralisieren, üblicherweise werden diese mittels klassischer Füllungstherapie behandelt, bei der auch gesunde Zahnsubstanz entfernt werden muss. Besonders nachteilig ist die Füllungstherapie bei approximal, d.h. an der dem Nachbarzahn zugewandten Seite des Zahns, vorliegender Karies, da, um einen Zugang zu schaffen, in gesteigertem Maß gesunde Zahnsubstanz entfernt werden muss. Wegen der schlechten Zugänglichkeit auch für Zahnbürsten kommt approximale Karies aber wesentlich häufiger vor als an Glattflächen (Außen- (vestibulär) und Innenseiten (lingual/palatinal) der Zähne).

Die Notwendigkeit des Entfernens gesunder Zahnsubstanz wird durch das Verfahren der Infiltration von Schmelzläsionen weitgehend vermindert, indem ein Infiltrant, eine Flüssigkeit mit hohem Penetrationskoeffizient, in die bestehende Läsion eingebracht und dort polymerisiert wird, nachdem, falls dies erforderlich ist, die wenig poröse Oberflächenschicht der Karies mit einem Ätzmittel (z.B. einem Säuregel) entfernt worden ist, um die Poren des beschädigten Bereichs zu öffnen. Die Läsion ist somit vor dem Zutritt von Bakterien und/oder deren Stoffwechselprodukten geschützt. Um den Infiltranten approximal anzuwenden, sind wegen des erschwerten Zugangs spezielle Applikationshilfen nötig.

Zu diesem Zweck sind Folien zur Verwendung als Hilfsmittel zum Auftragen von Substanzen auf approximale Zahnflächen bekannt.

Die Deutsche Offenlegungsschrift DE 10216950 A1 beschreibt das Auftragen eines Fluoridgels mittels einer flexiblen Folie. Um das Einführen der Folie in den Zahnzwischenraum zu erleichtern, kann diese längs des Folienrandes durch einen integrierten Faden verstärkt sein. Eine Verlängerung dieses Fadens soll ein Verschlucken der Folie verhindern.

Die veröffentlichte Internationale Anmeldung WO 00/66025 A1 beschreibt eine Methode zum Auftragen und Aushärten von dentalen Schutzlacken mittels eines Gewebebandes. Dieses enthält Bereiche mit Trägermaterialien, die die Substanzen bereithalten. Das Band besteht an seinen Enden typischerweise aus Zahnseide oder auch anderen Garnen, um das Einführen in den Zahnzwischenraum zu erleichtern. Die Bänder weisen eine ausreichende Beweglichkeit auf, um sich an den Zahnbogen anzupassen, und/oder das Trägermaterial ist dem Zahnbogen angepasst.

Aus der Europäischen Patentanmeldung EP 1854445 A1 sind weiterhin Polymer-Kunststofffolien zur Verwendung als Applikationsstreifen für die Infiltration approximaler Schmelzläsionen bekannt. Die Applikationsstreifen bestehen aus ca. 20 cm langen Kunststofffolien, auf die ein Belag aufgebracht ist, der einen Infiltranten bzw. ein Ätzmittel trägt.

Alle zuvor beschriebenen Applikationsstreifen sind jedoch nachteilig, da sie bedingt durch ihre Abmessungen und Beweglichkeit schwer zu handhaben sind. Die Handhabung wird weiterhin erschwert, da sich Polymer-Kunststofffolien statisch aufladen können und dann an den Händen bzw. Handschuhen des Anwenders haften. Die Beweglichkeit birgt auch die Gefahr, dass die zu übertragenden Substanzen in Berührung mit gesundem Zahnschmelz oder gar der Mundschleimhaut kommen. Weiterhin sind sie nur mit zwei Händen im Mundraum anzuwenden, sodass der Anwender keine Hand mehr frei hat, um ein weiteres Gerät (Dentalspiegel etc.) mit einzuführen. Weiterhin etwa bei hinteren Backenzähnen muss der Anwender mit den Fingern tief in den Mundraum eindringen, um die Folien im Zahnzwischenraum korrekt in Position zu bringen. Dies verengt den begrenzten Arbeitsraum sowie das Sichtfeld. Gewebe wie beispielsweise Zahnseide sind nachteilig, weil sie nicht dicht gegenüber den einzusetzenden Infiltranten sind, weil sie selbst bei großer Garnstärke noch sehr beweglich sind. Als weiterer Stand der Technik sei noch eine Mavrize für Füllungraumbegreuzung der WO 2006/011003 genannt. Aufgabe der Erfindung ist es, die Nachteile bekannter Applikationsstreifen zu überwinden.

Die erfindungsgemäße Lösung besteht darin, dass das flächige Element eine flüssigkeitsdichte Kunststofffolie ist, dass die Halterung ein bügelförmiges Element mit einem Steg und zwei sich von demselben erstreckenden seitlichen Armen ist, die bogen- oder U-förmig angeordnet sind, mit dem die Kunststofffolie flüssigkeitsdicht verbunden ist, und dass das bügelförmige Element einen oder mehrere Kanäle aufweist. Im Gegensatz zum eingangs genannten Stand der Technik ist die Kunststofffolie nicht durchlässig für Flüssigkeit, so dass diese nur auf einer Seite aufgetragen und wirken kann. Das flächige Element ist auch nicht nur einfach in zwei Führungen eingesteckt und liegt auf dem Halter ohne irgend eine Abdichtung auf. Durch die flüssigkeitsdichte Verbindung mit dem bügelförmigen Element wird dagegen sichergestellt, dass auch an der Stelle, an der er das flächige Element gehalten wird, keine Flüssigkeit zur anderen Seite gelangen kann.

Bei einer vorteilhaften Ausführungsform ist die Folie zumindest teilweise transparent. Dies verbessert wesentlich die Sichtverhältnisse bei der Behandlung.

Die Folie wird durch das bügelförmige Element in ihrer Beweglichkeit eingeschränkt, sodass der Anwender diese leicht mit einer Hand im Mundraum anwenden kann.

Bügelförmige Halterungen sind zwar im Dentalbereich etwa für Zahnseide oder Schleifbänder zur Reinigung approximaler Zahnflächen bekannt. Beispielhaft seien hier die US 2005/0271999 DE 91 06 538 U1, EP 1769 773 A1, die noch Kissen mit durch speichel zu Lösenden stoffen aufweist, US 2006/01278 45 A1 und die EP 1449495 A2 genannt. Diese müssen aber sehr stabil ausgebildet seien, da sie beim Reinigen der Zahnflächen oder Zahnzwischenräume großen Kräften widerstehen und daher entsprechend groß ausgebildet sein müssen. Diese Problematik tritt bei der infiltration approximaler Schmelzläsionen nicht auf, da dort nur eine dünne Folie in den durch einen Separierungskeil oder dergleichen leicht aufgeweiteten Zahnzwischenraum eingebracht werden muss und bevorzugt, nach Entfernen des Separationskeils, durch die benachbarten Zähne selbst gehalten wird, wobei keine weiteren Reibungskräfte auf die Folie ausgeübt werden. Daher würde man erwarten, dass der Fachmann diese bekannten bügelförmigen Halterungen nicht in Betracht ziehen würde, wenn er nach einer Lösung der Aufgabe sucht, sie sogar wegen der zusätzlichen Kosten und des zusätzlichen Raums, den sie einnehmen, für nachteilig halten würde. Es ist das Verdienst der Erfindung, dieses Vorurteil überwunden zu haben. Außerdem müssen für die erfindungsgemäße Anwendung die bügelförmigen Halterungen gegen aggressive Medien, insbesondere Salzsäure beständig sein, was bei den bügelförmigen Halterungen des Standes der Technik nicht der Fall sein muss.

Die Folie, die bei der erfindungsgemäßen Vorrichtung vorgesehen ist, enthält einen gesonderten Bereich, der eine Flüssigkeit aufnehmen kann bzw. bereithält. Wird die Flüssigkeit mit der approximalen Schmelzläsion in Kontakt gebracht, gibt dieser Bereich die Flüssigkeit an die Läsion ab (sie infiltriert) Die Infiltrationsflüssigkeit kann Bestandteil eines Gels sein.

Das bügelförmige Element weist gegenüber der Folie eine erhöhte Steifheit auf, wodurch die Folie stabilisiert wird. Unkontrollierte Bewegungen, Verdrehen, Abknicken oder Verbiegen des Applikationsstreifens werden so verhindert. Das bügelförmige Element besteht bevorzugt aus einem thermoplastischen Kunststoff. Es ist bevorzugt ein Spritzgussteil. Es weist einen oberen Steg und zwei seitliche Arme auf. Steg und Arme sind bevorzugt einteilig ausgebildet. Steg und Arme sind bogen- oder U-förmig angeordnet. Bevorzugt kann sich die Spannweite des Bogens zu den Enden hin verjüngen. Das bügelförmige Element weist eine Größe auf, die es erlaubt, mindestens eine Folie aufzunehmen, die der approximalen Fläche eines menschlichen Zahnes entspricht. Es weist eine Größe auf, die es erlaubt, die Vorrichtung vollständig in den Mundraum einzuführen und in einem Zahnzwischenraum anzuwenden. Das bügelförmige Element hat eine Spannweite von 5 bis 35 mm, bevorzugt 10 bis 25 mm, besonders bevorzugt 15 bis 20 mm. Die seitlichen Arme haben dabei etwa eine Länge, die der Höhe einer Zahnkrone entspricht. Die seitlichen Arme sind bevorzugt etwas länger als die benachbarten Zahnkronen hoch sind. Der Steg hat eine Länge von 3 bis 25 mm, bevorzugt 4 bis 20 mm, besonders bevorzugt 5 bis 15 mm.

Das bügelförmige Element kann eine vorbestimmte Biegefestigkeit aufweisen. Insbesondere im Bereich des Steges weist es eine Biegefestigkeit auf, die es ermöglicht, dies Vorrichtung quer zur Bissfläche leicht zu biegen, um die eingespannte Kunststofffolie besser an eine gekrümmte approximale Zahnfläche anzupassen.

Alternativ kann hierzu das bügelförmige Element so gestaltet sein, dass die Folie quer zur Bissfläche von vorneherein in eine Bogenform gezwungen wird. Der Steg ist dann quer zur Bissfläche der Zähne bogenförmig ausgebildet. Die Arme erstrecken sich im Wesentlichen orthogonal zur Biegung des Stegs. Die Folie folgt im Wesentlichen dem Verlauf des Bogens und ist mit den Armen sowie dem Steg fest verbunden.

Eine weitere Alternative ist es, Kunststofffolien auszuwählen, die so dehnbar sind, dass sie sich leicht an die Zahnoberfläche anschmiegen.

Die Kunststofffolie ist fest mit dem bügelförmigen Element verbunden. Die Kunststofffolie kann in das bügelförmige Element eingeklemmt oder eingespannt werden. Vorzugsweise ist aber eine zerstörungsfreie Trennung nicht vorgesehen. Bevorzugt ist die Kunststofffolie an das bügelförmige Element geschweißt oder geklebt.

Die Vorrichtung ist bevorzugt als Wegwerfteil ausgebildet und nur zur einmaligen Benutzung vorgesehen. Eine mehrmalige Benutzung ist aber ebenfalls möglich.

Die Kunststofffolie ist im Wesentlichen oder zumindest teilweise transparent, bevorzugt ist die gesamte Folie transparent. Dies ermöglicht allgemein ein verbessertes Sichtfeld, insbesondere ermöglicht dies gute Sicht auf das Behandlungsgebiet.

Die Kunststofffolie ist bevorzugt aus einem Kunststoff, der mit dem Kunststoff des bügelförmigen Elements leicht zu verschweißen ist. Die Kunststofffolie weist zweckmäßigerweise eine hohe Reißfestigkeit bei gleichzeitig geringer Dicke auf. Die Kunststofffolie weist insbesondere eine gute chemische Beständigkeit gegen die aufzunehmenden Flüssigkeiten auf. Der Kunststoff ist bevorzugt ein Polyolefin, wie z.B. Polyethylen (HDPE, LDPE), Polypropylen, Polystyren, Polyvinylchlorid oder Polyacrylat, ein Polyamid, ein Polyester oder Polycarbonat. Unter Kunststoffen sind hier auch solche auf Grundlage natürlicher Polymere wie z.B. Zelluloid zu verstehen. Besonders bevorzugt ist Polyethylenterephthalat (PET), z.B Hostaphan^{®}. Wichtig ist, dass die Folie widerstandsfähig gegen aggressive Medien, insbesondere Salzsäure ist. Sie muss die maximale Kontaktzeit von circa einer Stunde im Wesentlichen unbeschädigt überstehen.

Die Kunststofffolie weist insbesondere im nicht gespannten Zustand eine gewisse Eigenstabilität auf, sodass z.B. ein Stauchen verhindert wird. Weiterhin muss die Kunststofffolie eine Dicke aufweisen, die das Einführen in den Zahnzwischenraum ermöglicht. Bevorzugt hat die Kunststofffolie zusammen mit dem Bereich zur Aufnahme der Flüssigkeit bzw. mit der Flüssigkeit eine Dicke, die das Einführen in den Zahnzwischenraum ermöglicht. Die Kunststofffolie hat eine geringere Stärke als etwa 1 mm, bevorzugt eine geringere Stärke als etwa 0,5 mm, weiter bevorzugt eine geringere Stärke als etwa 0,3 mm, weiter bevorzugt eine geringere Stärke als etwa 0,1 mm, besonders bevorzugt eine geringere Stärke als etwa 0,05 mm.

Die Höhe und Länge der Kunststofffolie ist dem bügelförmigen Element angepasst. Die Dimensionen gewährleisten, dass eine Berührung der Flüssigkeit mit dem Nachbarzahn weitestgehend vermieden wird. Dieser Kontaminationsschutz wird weiter verbessert, wenn die Folie dreiseitig, dem Bügelverlauf folgend, abdichtend mit dem bügelförmigen Element verbunden ist.

Der Bereich zur Aufnahme der Flüssigkeit, also das eigentliche Applikationsfeld ist so beschaffen, dass es eine geeignete Menge Substanz aufnehmen und auch leicht wieder abgeben kann. Er sollte so beschaffen sein, dass die Substanz weitestgehend auf das Applikationsfeld begrenzt bleibt.

Der Bereich zur Aufnahme der Flüssigkeit ist im einfachsten Fall eine aufgeraute Fläche der Folie. Dies kann beispielsweise durch thermische Behandlung der Folie erfolgen.

Weiterhin kann als Applikationsfeld ein Belag auf der Folie dienen. Dieser Belag besteht beispielsweise aus Schaumstoff, Gewebe (synthetisch oder natürlich), Papier oder Filz.

Weiterhin ist es möglich, den Belag durch Beflockung der Folie herzustellen. Der Flock sowie der Kleber weisen eine gute chemische Beständigkeit gegen die aufzunehmenden Flüssigkeiten auf. Der Flockauftrag erfolgt vorzugsweise als Designbeflockung (partielles Applizierfeld) oder alternativ als Ganzflächenbeflockung. Als Haftvermittler werden vorzugsweise siebdruckfähiger Dispersionsklebstoff, Polyurethan-Klebstoff, oder Kontaktklebstoff der Fa. CHT oder Fa. KIWO verwendet. Als Flocktypen werden vorzugsweise Polyäthersulfon oder Polyester, Polymethylmethacrylat, Polypropylen, aromatische Polyamide, spez. Aramid, Viskose, verwendet. Die Faserlängen betragen weniger als 2 mm, vorzugsweise ungefähr 0,2mm. Die Faserdicke beträgt weniger als 6,6 dtex, vorzugsweise ungefähr 0,9 dtex. Die Fasern können vorzugsweise weiß sein, um die aufgetragenen Medien besser erkennen zu können, oder sie können beliebig eingefärbt sein.

Die aufgeraute Folie oder der Belag zusammen mit der Folie haben eine geringere Dicke als etwa 1 mm, bevorzugt eine geringere Dicke als etwa 0,5 mm, weiter bevorzugt eine geringere Dicke als etwa 0,4 mm, besonders bevorzugt eine geringere Dicke als etwa 0,3 mm.

Das Applikationsfeld kann weiterhin als Vertiefung oder Vielzahl von Vertiefungen und/oder Mulde oder Vielzahl von Mulden ausgebildet sein. Bevorzugt werden die Vertiefungen durch Laserbearbeitung einer Folie oder durch den Verbund zweier Folien gebildet, wobei eine der Folien eine oder eine Vielzahl von durchgehenden Ausnehmungen enthält, die nach Verbund der Folien die Vertiefung oder Vielzahl von Vertiefungen bildet bzw. bilden. Der Verbund kann beispielsweise durch Heißsiegeln hergestellt werden. Die Vertiefungen und/oder Mulden sind bevorzugt kreisrund bis oval. Die Vertiefungen können zusätzlich einen zuvor beschriebenen Belag enthalten. Mulden werden bevorzugt durch Tiefziehen hergestellt. Das Applikationsfeld hat eine geringere Dicke als etwa 1 mm, bevorzugt eine geringere Dicke als etwa 0,5 mm, weiter bevorzugt eine geringere Dicke als etwa 0,3 mm, weiter bevorzugt eine geringere Dicke als etwa 0,1 mm, besonders bevorzugt eine geringere Dicke als etwa 0,05 mm.

Die Kunststofffolie mit dem Applikationsfeld kann weiterhin Bereiche aufweisen, die Reinigungselemente enthalten. Die Reinigungsbereiche sind rechts und/oder links des Applikationsfeldes angeordnet, bevorzugt jedoch rechts oder links. Die Reinigungsbereiche werden durch Abstreifer gebildet. Zwischen den Abstreifern befinden sich Vertiefungen, wobei rillenförmige Vertiefungen bevorzugt sind, die bevorzugt quer zur Abstreifrichtung verlaufen. Es können jedoch auch andere Geometrien verwendet werden. Sie dienen zum Abstreifen überschüssigen Infiltrationsmaterials.

Bevorzugt werden die Vertiefungen durch den Verbund zweier Folien gebildet, wobei eine der Folien eine Ausnehmung oder eine Vielzahl von Ausnehmungen enthält, die nach Verbund der Folien die Vertiefungen bildet bzw. bilden. Die Abstreifer werden durch das verbliebene Folienmaterial gebildet.

Die Abstreifer können auch von anderweitig mit der Folie verbundenen Lamellen gebildet werden. Die Lamellen können dabei beispielsweise thermisch befestigt oder mittels eines Klebers aufgebracht werden. Solcherart befestigte Lamellen bestehen vorzugsweise aus elastischen Materialien beispielsweise Silikon oder Gummi.

Die Abstreifer sind bevorzugt schräg angeordnet, sodass die Substanz während des Abstreifens der Zahnoberfläche besser abfließen kann. Die Abstreifer können auch nach beiden Seiten abgewinkelt bzw. bogenförmig sein, sodass von der Zahnoberfläche aufzunehmende überschüssige Flüssigkeit gut abfließen kann.

Es können zusätzlich Überschussrillen längs zur Abstreifrichtung verlaufen, und/oder die Vertiefungen zwischen den Abstreifern sind zumindest nach einem Ende des Folienstreifens offen. Dies verhindert, dass eine Sogwirkung in den Vertiefungen entsteht und dadurch Flüssigkeit aus der infiltrierten Läsion wieder herausgesaugt wird. Aus diesem Grund sind stark saugfähige Reinigungselemente beispielsweise aus Geweben oder Baumwollkissen für die Infiltrationsmethode wenig geeignet.

Die verschiedenen Bereiche des Applikationsstreifens können unterschiedlich gefärbt sein bzw. unterschiedliche Färbungen annehmen.

Das bügelförmige Element kann Einrichtungen aufweisen, um einen Haltegriff zu befestigen. Das Einführen und Platzieren der Applikationshilfe mittels eines Haltegriffs hat den Vorteil, dass der Anwender nicht mit den Fingern in der Mundhöhle hantieren muss. Dies erlaubt zum einen eine weiter verbesserte Sicht auf das Behandlungsareal und weiterhin eine besser kontrollierte Anwendung der erfindungsgemäßen Vorrichtung. Der Haltegriff ist bevorzugt oberhalb und/oder seitlich am Steg des bügelförmigen Elements oder an einem der Arme angebracht. Die Befestigung kann dabei über eine scharnierartige Verbindung erfolgen, damit nach Einsetzen der Vorrichtung der Haltegriff zur Seite geklappt bzw. gebogen werden kann. Alternativ könnte die Verbindung eine Sollbruchstelle aufweisen, so dass der Haltegriff nach Einbringen der Vorrichtung abgebrochen werden kann.

Die Flüssigkeit kann unmittelbar vor der Anwendung mit üblichen Dentalpinseln oder Spritzen auf das Applikationsfeld der Kunststofffolie aufgetragen werden.

Ein werksseitiger Auftrag der Infiltrationsflüssigkeit auf den Applikationsbereich ist möglich, jedoch unvorteilhaft. Die Produkte haben üblicherweise Haltbarkeiten von mehreren Jahren und müssen deshalb sicher gelagert werden können. Um eine Infiltrationsflüssigkeit oder ein Ätzgel über einen längeren Zeitraum auf dem Applikationsfeld einsatzbereit zu lagern, sind weiterhin sehr hohe Anforderungen beispielsweise an die chemische Beständigkeit der Folie zu stellen. Weiterhin kann die Flüssigkeit flüchtige Komponenten enthalten, was eine gas- und/oder dampfdichte Verpackung der gesamten Applikationshilfe erfordern würde. Außerdem weisen die Infiltrationsflüssigkeiten ein ausgeprägtes Kriechverhalten auf und könnten sich während der Lagerzeit vom Applikationsbereich aus über die gesamte Vorrichtung verteilen. Dies würde die Vorrichtung unbrauchbar machen. Die Infiltrationsflüssigkeit enthält Polymerisationsinitiatoren, die beispielsweise lichtgeschützt gelagert werden müssen. Vorteilhaft wird daher die Flüssigkeit getrennt vom Applikationsstreifen, der Kunststofffolie, gelagert.

Um die Flüssigkeit stabil und sicher über mehrere Monate bis Jahre zu lagern, werden bevorzugt lichtgeschützte, chemisch beständige, gas- und/oder dampfdichte Spritzen verwendet. Die Spritzen bestehen bevorzugt aus Glas und/oder Kunststoff, besonders bevorzugte Kunststoffe sind Cyclo-Olefin-Polymere (COP) und/oder Cyclo-Olefin-Copolymere (COC). Die Spritze kann als Karpule, einfache Druckspritze oder Drehspritze ausgebildet sein.

Bei einer Ausführungsform wird die Flüssigkeit erst auf das Applikationsfeld der Folie aufgetragen, wenn der Applikationsstreifen bereits im Zahnzwischenraum platziert ist. Somit ist der Schutz vor Kontamination anderer Bereiche mit der Flüssigkeit weiter verbessert. Die Sicherheit der Anwendung ist erhöht. Weiterhin ist eine gezieltere Dosierung möglich.

Hierzu kann es vorgesehen sein, dass die Flüssigkeit über das bügelförmige Element auf das Applikationsfeld der Folie geleitet wird. Hierzu enthält das bügelförmige Element einen oder mehrere Kanäle. Diese Kanäle sind bevorzugt im Steg des bügelförmigen Elements enthalten. Die Kanäle führen von einer Öffnung im bügelförmigen Element zur Folie, besonders bevorzugt direkt zum Applikationsfeld, und zwar vom Steg und/oder den Armen her. An die Öffnung kann beispielsweise eine Spritze angesetzt oder in die Öffnung dicht schließend eingeführt werden und die Flüssigkeit über die Kanäle auf die Folie geleitet werden. Geeignete Spritzen sowie Applikationsgeräte für diese sind beispielsweise in der Europäischen Patentschrift EP 0714638 B1 beschrieben.

Die Spritze kann auch in den zuvor beschriebenen Haltegriff integriert werden. Dies kann in einer Weise erfolgen, dass die Spritze von außerhalb der Mundhöhle betätigt werden kann.

Ist der Applikationsstreifen wie zuvor beschrieben als Verbundfolie ausgebildet, kann auch der Applikationsstreifen Kanäle zwischen den beiden Folien aufweisen. Diese stellen dann Verlängerungen der Kanäle im bügelförmigen Element dar und führen von diesen zum Applikationsfeld der Kunststofffolie und erstrecken sich bevorzugt in das Applikationsfeld hinein, sodass eine einseitig durchlöcherte Tasche für die Flüssigkeit entsteht.

Die Kanäle des bügelförmigen Elements und die Kanäle des Applikationsstreifens können durch zusätzliche Elemente verstärkt, ergänzt oder verbunden werden, beispielsweise ein Schlauchelement.

Es kann auch vorgesehen sein, eine Dosis der Flüssigkeit direkt im oder am bügelförmigen Element zu lagern. Bei einer Ausführungsform der Erfindung wird hierzu ein Folienbeutel verwendet, der sich bei Druck in die zuvor beschriebenen Kanäle entleert. Bevorzugte Folienbeutelanordnungen sind beispielsweise in der veröffentlichten Internationalen Anmeldung WO 2007/017225 A2 beschrieben. Auch die Verwendung von Kapseln oder Hohlräumen mit Ausbringkolben ist möglich.

Wie dies oben erwähnt wurde, kann die Folie Bereiche zum Entfernen überschüssiger Flüssigkeit enthalten. Alternativ kann eine gesonderte Vorrichtung vorgesehen sein, die ein bügelförmiges Element und eine Kunststofffolie mit den beschriebenen Reinigungselementen, aber keinen Bereich zur Applikation (Infiltration) aufweist. Diese Vorrichtung bildet zweckmäßigerweise mit der genannten Vorrichtung zur Infiltration eine Gesamtvorrichtung in Form eines Behandlungssatzes, der zusätzlich einen oder mehrere Separierungskeile verschiedener Größe zum Aufweiten des Zahnzwischenraums, ein Ätzmittel, ein Trocknungsmittel und/oder eine Applikationshilfe für das Ätzmittel sowie die Infiltrationsflüssigkeit aufweist. Wenn die Vorrichtung zur Infiltration auch Abstreifer aufweist, kann bei dem Satz auch auf die Vorrichtung verzichtet werden, die nur Abstreifer enthält.

Grundsätzlich geeignete Separationskeile des Satzes sind beispielsweise im United States Patent US 6,482,007 B2 beschrieben. Das Trocknungsmittel für die Läsion ist vorzugsweise ein leicht flüchtiges, toxikologisch unbedenkliches Lösungsmittel, insbesondere enthält dieses Ethanol. Weiterhin kann der Satz Pinsel und/oder Spritzen zum Auftragen der verschiedenen Materialien auf die Applikationshilfen oder auch auf den Zahn direkt enthalten.

Die Separierungskeile haben dabei zweckmäßigerweise dreieckigen Querschnitt, wobei es sich als besonders vorteilhaft erwiesen hat, wenn eine der drei Spitzen des dreieckigen Querschnitts abgeflacht ist, so dass der Querschnitt trapezförmig ist, da dies das Einbringen der Folie erleichtert, wenn die abgeflachte Spitze vom Zahnfleisch weggerichtet ist.

Die Vorrichtung für die Infiltration lässt sich natürlich genauso gut für die Behandlung mit einem flüssigen oder gelartigen Ätzmittel verwenden.

Die Erfindung wird im Folgenden anhand von vorteilhaften Ausführungsformen unter Bezugnahme auf die beigefügten Zeichnungen beispielsweise beschrieben. Es zeigen:
- Fig. 1: eine erfindungsgemäße Vorrichtung in perspektivischer Darstellung;
- Fig. 2: die Ausführungsform der Fig. 1 mit einem daran angebrachten Haltegriff;
- Fig. 3: eine Ausführungsform mit Kanälen zum Zuführen der Flüssigkeit für die Infiltration;
- Fig. 4: im teilweisen Querschnitt eine Ausführungsform mit Kanälen und einer in einem Haltegriff angeordneten Spritze zum Zuführen der Flüssigkeit für die Infiltration;
- Fig. 5: in Explosionsansicht einen Teil der erfindungsgemäßen Vorrichtung;
- Fig. 6: eine Ausführungsform mit einem Folienbeutel für die Flüssigkeit;
- Fig. 7: eine Querschnittsansicht der Ausführungsform der Fig. 6;
- Fig. 8: eine andere Ausführungsform der erfindungsgemäßen Vorrichtung; und
- Fig. 9: eine andere Anwendung eines Teils der erfindungsgemäßen Vorrichtung.

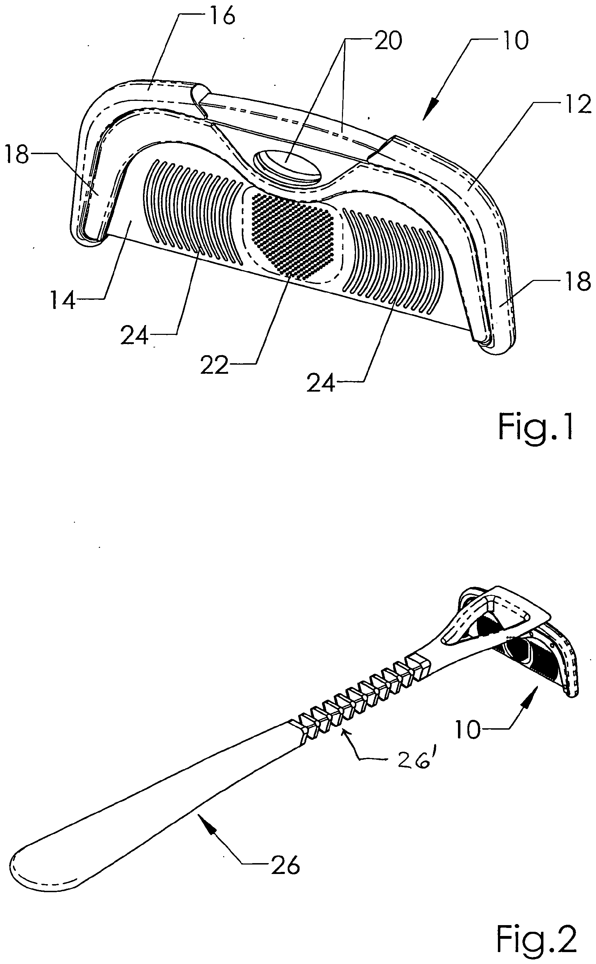

In Fig. 1 ist eine Ausführungsform der erfindungsgemäßen Vorrichtung 10 gezeigt, die ein bügelförmiges Element 12 aufweist, das im Wesentlichen U-förmig ist und einen Steg 16 sowie zwei Arme 18 aufweist. Das bügelförmigen Element 12 ist vorteilhafterweise aus Kunststoff, insbesondere ein Spritzgussteil. Zwischen dem Steg 16 und den Armen 18 ist eine Kunststofffolie 14 befestigt, deren untere Kante bis an die freien Enden der Arme 18 reicht. Die Kunststofffolie weist einerseits im Bereich 22 Vertiefungen auf, auf die bzw. in die ein Infiltrationsmittel auf- bzw. eingebracht werden kann. Rechts und links neben dem Bereich 22 der Vertiefungen sind Lamellen 24 vorgesehen, die zum Abstreifen überflüssiger Flüssigkeit dienen. Der Steg 16 ist mit Ausnehmungen 20 versehen, die zur Befestigung eines Haltegriffs 26 dienen, der in Fig. 2 gezeigt ist. Der Haltegriff 26 kann einen biegbaren Bereich 26' aufweisen. Dieser Haltegriff kann auch seitlich an einem Arm 18 angebracht sein und dabei vorteilhafterweise mit einem scharnierartigen Verbindungsbereich am Arm 18 befestigt sein, damit der Haltegriff 26 nach dem Anbringen der Vorrichtung 10 im Zahnzwischenraum umgeklappt werden kann. Andererseits kann die Befestigung eine Sollbruchstelle sein, so dass der Haltegriff 26 nach Anbringen der Vorrichtung 10 aus dem Mundraum entfernt werden kann.

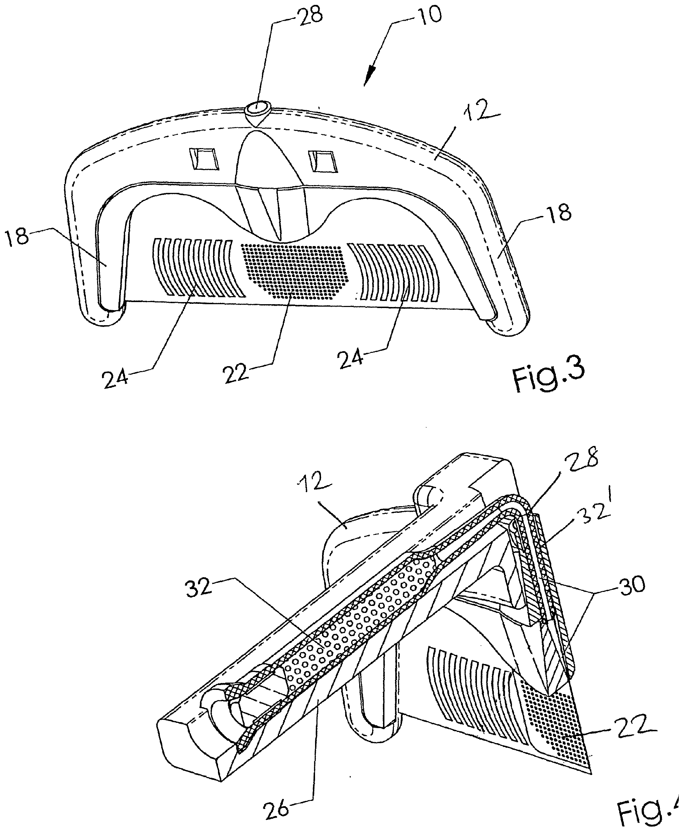

Die Ausführungsformen der Fig. 3 und 4 unterscheiden sich dadurch von der Ausführungsform der Fig. 1, dass sie in Fig. 4 gezeigte Kanäle 30 aufweist, die von einer oberen Öffnung 28 zum Bereich 22 führen, wo die Vertiefungen für das Infiltrationsmittel vorgesehen sind. Das Infiltrationsmittel, insbesondere eine Flüssigkeit, könnte bei der Ausführungsform der Fig. 3 oben eingefüllt werden und würde dann durch Schwerkraftwirkung in den Bereich 22 gelangen. Bei der Ausführungsform der Fig. 4 ist für diesen Zweck eine Spritze 32 vorgesehen, die im Haltegriff 26 angeordnet ist und über den abgewinkelten vorderen Bereich 32' an die Öffnung 28 bzw. an das bügelförmige Element 12 angesetzt ist. Die Öffnung 28 und der vordere Bereich 32' der Spritze sind hier leicht konisch ausgebildet, können aber verschiedene aufeinander abgestimmte Formen aufweisen, sodass sie ein dicht schließendes Ansetzen ermöglichen.

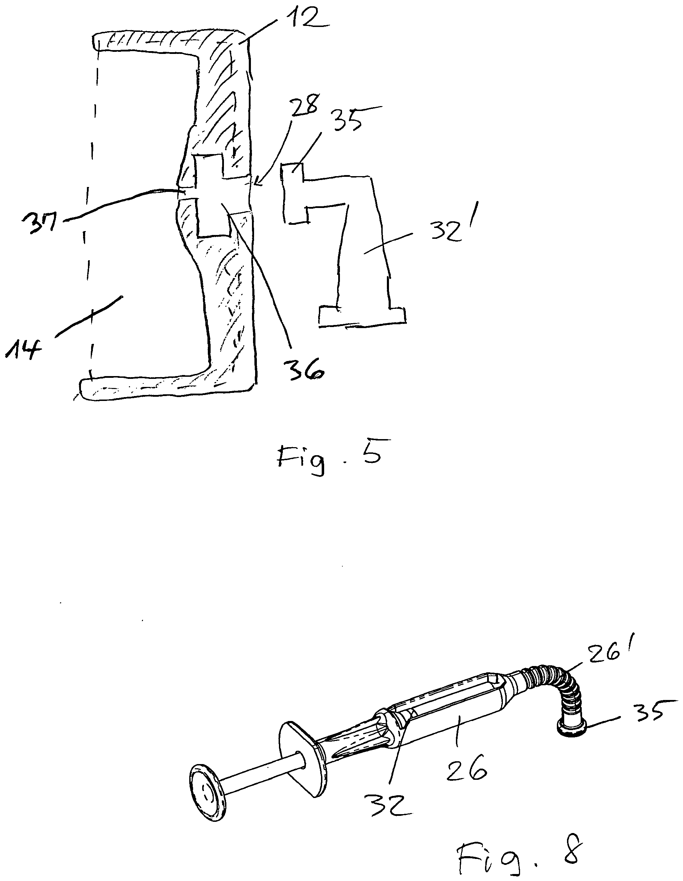

Die Fig. 5 zeigt eine bevorzugte Gestaltung des vorderen Bereichs 32', der ein zu einer entsprechenden Öffnung 28 passendes scheibenförmiges Element 35 umfasst. Die Kontur und die Innenmaße der Öffnung 28 entsprechend dabei im Wesentlichen den Außenmaßen des vorderen Bereichs 32' mit dem scheibenförmigen Element 35. Fig. 5 zeigt dabei nur eine Hälfte des bügelförmigen Elements 12, die im Bereich der Öffnung 28 mit einer Vertiefung 36 versehen ist, die ebenso in der anderen dazu symmetrischen Hälfte des bügelförmigen Elements 12 vorgesehen ist. In diese Vertiefungen 36 passt das scheibenförmigen Element 28 hinein. Nachdem das scheibenförmige Element 28 in die Vertiefung 36 einer Hälfte des Elements 12 eingesetzt ist, werden die in Fig. 5 gestrichelt dargestellte Folie 14 und die zweite Hälfte des bügelförmigen Elements 12 darüber gelegt und miteinander durch Kleben, Schweißen oder dergleichen verbunden. Zweckmäßigerweise ist dabei die Folie 14 doppellagig, wobei eine Lage unter und eine über dem scheibenförmigen Element 35 angeordnet wird, damit dann die Flüssigkeit zwischen die Folienlagen und dann durch entsprechende Perforierungen der Folie 14 auf einer Seite nach außen gelangen kann. Der Kanal 30 kann auch über ein Schlauchelement 37 mit den Kanälen des Applikationsstreifens 14 verbunden sein.

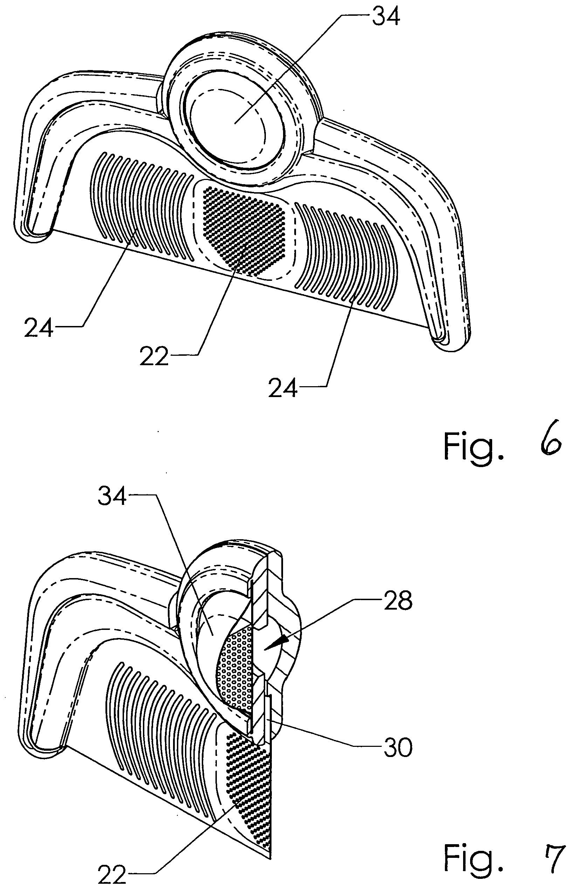

Bei der Ausführungsform der Fig. 6 und 7 ist im Bereich der Öffnung 28 ein Folienbeutel 34 angebracht, der die Infiltrationsflüssigkeit enthält. Durch Druckausübung auf den Folienbeutel 34 kann dieses Infiltrationsmittel dann in den Bereich 22 mit den Vertiefungen für das Infiltrationsmittel bewegt werden. Vorzugsweise weist dabei der Folienbeutel 34 im unteren Bereich eine (in der Fig. nicht gezeigte) Sollbruchstelle auf, die bei der Druckausübung platzt, damit die Flüssigkeit in den Bereich 22 gelangen kann.

Fig. 8 zeigt einen Teil der Applikationshilfe 10 mit Haltegriff 26 und darin angeordneter Spritze 32 und scharnierartig gebogenem bzw. biegbarem Bereich 26'. Der Bereich 26'ist röhrenförmig ausgebildet. Bevorzugt ist der Bereich 26' faltenbalgähnlich ausgebildet. Es kann sich jedoch auch um glatte Röhren aus duktilem, plastischem Material (Metall, Kunststoff) handeln, insbesondere aus einem Längsverbund verschiedener Materialien. Man erkennt dort auch das scheibenförmige Element 35, das mit der Öffnung 28 des bügelförmigen Elements 12 verbunden werden kann.

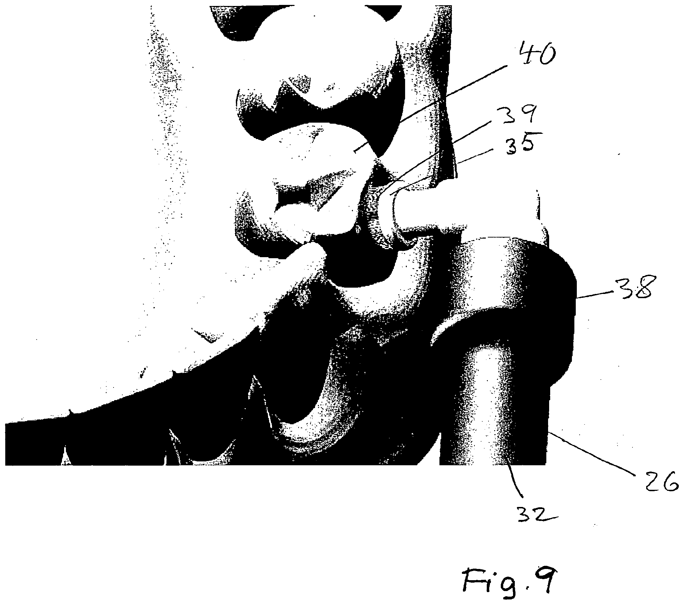

Der abgewinkelte vordere Bereich 32' der Spritze kann, wie dies auch in Fig. 5 gezeigt ist, als getrenntes Element ausgebildet sein, das trennbar mit der Spritze 32 verbunden werden kann. Es kann dann ein geeigneter (Luer-)Konus an der Spritze vorgesehen sein, die bevorzugt eine in Fig. 9 gezeigte Überwurfmutter 38 zur Sicherung der Verbindung aufweist (Luer-Lock).

In Fig. 9 ist auch eine andere Anwendung eines Teils der erfindungsgemäßen Vorrichtung gezeigt, der Bestandteil eines erfindungsgemäßen Satzes oder Kits sein kann. An dem scheibenförmigen Ende 35 eines Haltegriffs 26 oder einer Spritze 32 ist eine Beflockung 39 vorgesehen, die von der Flüssigkeit benetzt wird und mit der die freiliegenden Oberflächen von Zähnen 40 behandelt werden können. Die Winkelform ist dabei nicht unbedingt erforderlich.

### Liste der Bezugsziffern

- 10: Applikationshilfe
- 12: bügelförmiges Element
- 14: Applikationsstreifen/ Kunststofffolie
- 16: Steg
- 18: Arm
- 20: Einrichtung zur Befestigung eines Handgriffs
- 22: Applikationsfeld/ Vertiefungen
- 24: Reinigungsbereich/ Lamellen
- 26: Haltegriff
- 26': scharnierartiger oder biegbarer Bereich
- 28: Öffnung
- 30: Kanal
- 32: Spritze
- 32': abgewinkelter vorderer Bereich
- 34: Folienbeutel
- 35: scheibenförmiges Element
- 36: Vertiefung
- 37: Schlauchelement
- 38: Überwurfmutter
- 39: Beflockung
- 40: Zahn

## Patentansprüche

1. Vorrichtung zur Infiltration approximaler Zahnoberflächen mit einem flexiblen flächigen Element (14) und einer Halterung, in die das flächige Element, das einen Oberflächenbereich (22) zum Aufnehmen einer der Behandlung dienenden Flüssigkeit aufweist, aufgespannt ist, **dadurch gekennzeichnet, dass** das flächige Element (14) eine flüssigkeitsdichte Kunststofffolie (14) ist, dass die Halterung ein bügelförmiges Element (12) mit einem Steg (16) und zwei sich von demselben erstreckenden seitlichen Armen (18) ist, die bogen- oder U-förmig angeordnet sind, mit dem die Kunststofffolie (14) flüssigkeitsdicht verbunden ist, dass das bügelförmige Element (12) einen oder mehrere Kanäle (30) zum Zuführen der Flüssigkeit für die Infiltration aufweiset.

2. Vorrichtung nach Anspruch 1, **dadurch gekennzeichnet, dass** die Kanäle (30) von einer Öffnung (28) im bügelförmigen Element (12) zum Oberflächenbereich der Folie (14) führen, wo die Flüssigkeit aufgenommen werden soll.

3. Vorrichtung nach Anspruch 2, **dadurch gekennzeichnet, dass** die Öffnung (28) an einer Oberseite des Stegs (16) angeordnet ist.

4. Vorrichtung nach Anspruch 1, **dadurch gekennzeichnet, dass** die Folie (14) als Verbundfolie mit Kanälen zwischen beiden Folien ausgebildet ist, die Verlängerungen der Kanäle (30) im bügelförmigen Element (12) darstellen und von diesen zum Applikationsfeld der Kunststofffolie führen.

5. Vorrichtung nach Anspruch 4, **dadurch gekennzeichnet, dass** die Kanäle der Folie (14) sich in das Applikationsfeld hinein erstrecken, so dass eine einseitig durchlöcherte Tasche für die Flüssigkeit entsteht.

6. Vorrichtung nach einem der Ansprüche 1 bis 5, **dadurch gekennzeichnet, dass** die Folie (14) dreiseitig flüssigkeitsdicht mit dem bügelförmigen Element (12) verbunden ist.

7. Vorrichtung nach einem der Ansprüche 1 bis 6, **dadurch gekennzeichnet, dass** die Folie (14) mit dem bügelförmigen Element (12) durch Schweißen oder Kleben verbunden ist.

8. Vorrichtung nach einem der Ansprüche 1 bis 7, **dadurch gekennzeichnet, dass** die Folie (14) zumindest teilweise transparent ist.

9. Vorrichtung nach einem der Ansprüche 1 bis 8, **dadurch gekennzeichnet, dass** die Folie (14) im Bereich (22) zum Aufnehmen der Flüssigkeit mit Vertiefungen oder Mulden versehen ist.

10. Vorrichtung nach Anspruch 9, **dadurch gekennzeichnet, dass** die Vertiefungen oder Mulden durch den Verbund zweier Folien (14) gebildet sind, von denen eine mit Ausnehmungen versehen ist.

11. Vorrichtung nach einem der Ansprüche 1 bis 10, **dadurch gekennzeichnet, dass** sich die Folie (14) bis zu den freien Enden der Arme (18) erstreckt.

12. Vorrichtung nach einem der Ansprüche 1 bis 11, **dadurch gekennzeichnet, dass** sie einen Haltegriff (26) aufweist.

13. Vorrichtung nach Anspruch 12, **dadurch gekennzeichnet, dass** der Haltegriff (26) einen scharnierartigen oder biegbaren Bereich (26') zwischen seinem Hauptteil und seinem Ende aufweist, an dem das bügelförmige Element (12) befestigt wird.

14. Vorrichtung nach Anspruch 12 oder 13, **dadurch gekennzeichnet, dass** der Haltegriff (26) mit einer Spritze (32) für die Flüssigkeit versehen ist.

15. Behandlungssatz zur Infiltration approximaler Zahnoberflächen, **dadurch gekennzeichnet, dass** er eine Vorrichtung nach einem der Ansprüche 1 bis 14, sowie zusätzlich eine oder mehrere Separierungskeile verschiedener Größe zum Aufweiten des Zahnzwischenraums, ein Ätzmittel, ein Trocknungsmittel und/oder eine Applikationshilfe für das Ätzmittel sowie die Infiltrationsflüssigkeit aufweist.

## Claims

1. Device for infiltration of approximal tooth surfaces, with a flexible planar element (14), and with a holder into which the planar element, which has a surface area (22) for taking up a liquid to be used for treatment, is clamped, **characterized in that** the planar element (14) is a liquid-impermeable plastic film (14), **in that** the holder is a bow-shaped element (12) with a web (16) and with two lateral arms (18) which extend from the latter and which are arranged in an arc shape or U shape, to which the plastic film (14) is connected in a liquid-impermeable manner, **in that** the bow-shaped element (12) has one or more channels (30) for supplying the liquid for the infiltration.

2. Device according to Claim 1, **characterized in that** the channels (30) lead from an opening (28) in the bow-shaped element (12) to the surface area of the film (14), where the liquid is to be taken up.

3. Device according to Claim 2, **characterized in that** the opening (28) is arranged on a top face of the web (16).

4. Device according to Claim 1, **characterized in that** the film (14) is designed as a composite film having channels between both films, which channels represent continuations of the channels (30) in the bow-shaped element (12) and lead from these to the application field of the plastic film.

5. Device according to Claim 4, **characterized in that** the channels of the film (14) extend into the application field, such that a pocket perforated on one side is obtained for the liquid.

6. Device according to one of Claims 1 to 5, **characterized in that** the film (14) is connected to the bow-shaped element (12) in a liquid-impermeable manner on three sides.

7. Device according to one of Claims 1 to 6, **characterized in that** the film (14) is connected to the bow-shaped element (12) by welding or adhesive bonding.

8. Device according to one of Claims 1 to 7, **characterized in that** the film (14) is transparent at least in part.

9. Device according to one of Claims 1 to 8, **characterized in that** the film (14), in the area (22) for taking up the liquid, is provided with depressions or hollows.

10. Device according to Claim 9, **characterized in that** the depressions or hollows are formed by the joining of two films (14), of which one is provided with recesses.

11. Device according to one of Claims 1 to 11, **characterized in that** the film (14) extends as far as the free ends of the arms (18).

12. Device according to one of Claims 1 to 11, **characterized in that** it has a handle (26).

13. Device according to Claim 12, **characterized in that** the handle (26) has a hinge-like or bendable area (26') between its main part and its end on which the bow-shaped element (12) is secured.

14. Device according to Claim 12 or 13, **characterized in that** the handle (26) is provided with a syringe (32) for the liquid.

15. Treatment set for infiltration of approximal tooth surfaces, **characterized in that** it has a device according to one of Claims 1 to 14, and also additionally one or more separating wedges of different size for widening the interdental space, an etching agent, a drying agent and/or an application aid for the etching agent, and the infiltration liquid.

## Revendications

1. Dispositif d'infiltration de surfaces dentaires approximales avec un élément flexible plat (14) et un support, dans lequel est serré l'élément plat, qui présente une zone de surface (22) destinée à contenir un liquide à utiliser pour le traitement, **caractérisé en ce que** l'élément plat (14) est un film de matière plastique (14) étanche au liquide, **en ce que** le support est un élément en forme d'étrier (12) avec une âme (16) et deux bras latéraux (18) s'étendant à partir de celle-ci, qui sont disposés en forme d'arc ou de U, auquel le film de matière plastique (14) est assemblé de façon étanche au liquide, **en ce que** l'élément en forme d'étrier (12) présente un canal ou plusieurs canaux (30) permettant d'amener le liquide destiné à l'infiltration.

2. Dispositif selon la revendication 1, **caractérisé en ce que** les canaux (30) conduisent d'une ouverture (28) dans l'élément en forme d'étrier (12) à la région de la surface du film (14), où le liquide doit être placé.

3. Dispositif selon la revendication 2, **caractérisé en ce que** l'ouverture (28) est disposée sur un côté supérieur de l'âme (16).

4. Dispositif selon la revendication 1, **caractérisé en ce que** le film (14) est formé par un film composite avec des canaux entre les deux films, qui représentent des prolongements des canaux (30) dans l'élément en forme d'étrier (12) et conduisent de ceux-ci au champ d'application du film de matière plastique.

5. Dispositif selon la revendication 4, **caractérisé en ce que** les canaux du film (14) s'étendent dans le champ d'application, de telle manière qu'il se forme une poche perforée d'un côté pour le liquide.

6. Dispositif selon l'une quelconque des revendications 1 à 5, **caractérisé en ce que** le film (14) est assemblé sur trois côtés de façon étanche au liquide à l'élément en forme d'étrier (12).

7. Dispositif selon l'une quelconque des revendications 1 à 6, **caractérisé en ce que** le film (14) est assemblé à l'élément en forme d'étrier (12) par soudage ou par collage.

8. Dispositif selon l'une quelconque des revendications 1 à 7, **caractérisé en ce que** le film (14) est au moins partiellement transparent.

9. Dispositif selon l'une quelconque des revendications 1 à 8, **caractérisé en ce que** le film (14) est muni de creux ou de cuvettes dans la région (22) destinée à contenir le liquide.

10. Dispositif selon la revendication 9, **caractérisé en ce que** les creux ou les cuvettes sont formé (e) s par le composite de deux films (14), dont l'un est muni d'évidements.

11. Dispositif selon l'une quelconque des revendications 1 à 10, **caractérisé en ce que** le film (14) s'étend jusqu'aux extrémités libres des bras (18).

12. Dispositif selon l'une quelconque des revendications 1 à 11, **caractérisé en ce qu'**il présente une poignée de préhension (26).

13. Dispositif selon la revendication 12, **caractérisé en ce que** la poignée de préhension (26) présente une région de type charnière ou pliable (26') entre sa partie principale et son extrémité, à laquelle l'élément en forme d'étrier (12) est fixé.

14. Dispositif selon la revendication 12 ou 13, **caractérisé en ce que** la poignée de préhension (26) est munie d'une seringue (32) pour le liquide.

15. Ensemble de traitement pour l'infiltration de surfaces dentaires approximales, **caractérisé en ce qu'**il présente un dispositif selon l'une quelconque des revendications 1 à 14, ainsi qu'en outre un ou plusieurs coin(s) de séparation de grandeur différente pour l'élargissement de l'espace interdentaire, un moyen de décapage, un moyen de séchage et/ou un accessoire d'application pour le moyen de décapage ainsi que le liquide d'infiltration.
